# FASCICULE DE BREVET EUROPEEN

(11) **EP 2 558 282 B1**
(45) Date de publication et mention de la délivrance du brevet: **03.09.2014**
(21) Numéro de dépôt: 11721810.7
(22) Date de dépôt: 12.04.2011
(51) Int. Cl.: B29D 30/06, B66C 1/34

(54) **DISPOSITIF ET PROCÉDÉ DE MANUTENTION D'UNE ÉBAUCHE CRUE DE PNEUMATIQUE**
VORRICHTUNG UND VERFAHREN ZUR HANDHABUNG EINES UNGEHÄRTETEN REIFENROHLINGS
DEVICE AND METHOD FOR HANDLING AN UNCURED TYRE BLANK

(30) Priorité: 15.04.2010 FR 1052881
(43) Date de publication de la demande: 20.02.2013
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: MASCLAUX, Christophe, F-63040 Clermont-Ferrand Cedex 9 (FR)
(74) Mandataire: Noel, Luminita
(86) Numéro de dépôt international: PCT/FR2011/050841
(87) Numéro de publication internationale: WO 2011/128584

(56) Documents cités:
- DE-B- 1 157 769
- JP-A- 8 039 568
- SU-A1- 401 533
- US-A- 2 264 633
- US-A- 3 659 975
- US-A- 4 236 883
- US-A1- 2009 295 179

## Description

L'invention concerne la fabrication des pneumatiques de véhicule et en particulier la manipulation des ébauches crues de pneumatique.

Pour fabriquer un pneumatique, on réalise une ébauche crue qui comprend un bandage composé de gomme. A ce stade, la gomme présente un comportement largement plastique. Pour que le matériau devienne élastique, il dot être vulcanisé dans une presse de cuisson. Compte tenu du poids de l'ébauche et du caractère largement plastique du matériau qui la compose, l'opération de chargement de l'ébauche dans la presse est particulièrement délicate. On utilise à cette fin un dispositif appelé pince de préhension qui comprend des crochets. Lorsque l'ébauche est en position horizontale, les crochets saisissent le bandage par son diamètre intérieur supérieur au niveau du bourrelet supérieur. Une fois le bandage saisi, la pince présente l'ébauche dans la presse de cuisson afin qu'une membrane gonflable puisse venir se déployer à l'intérieur du bandage. La membrane supporte ensuite le poids du bandage et la pince de préhension peut escamoter les crochets. Elle se rétracte alors et la presse se ferme pour que débute l'opération de vulcanisation du bandage. Une fois le bandage vulcanisé, une pince de préhension spécifique l'extrait de la presse en le saisissant par le bourrelet supérieur au moyen de crochets et évacue le pneumatique. Cette opération d'extraction est moins délicate que l'opération d'introduction car le pneumatique ne présente plus la plasticité qui caractérisait le matériau avant la vulcanisation.

Toutefois, cette technique de préhension du bandage pour son introduction dans la presse présente quelques inconvénients. En effet, le retrait des crochets une fois le bandage introduit dans la presse implique d'abaisser le haut de la membrane qui se situe dans la trajectoire d'escamotage des crochets. Or, cela peut altérer la géométrie du bandage. En outre, il arrive que l'un des crochets se coince entre le bandage et la membrane.

Les documents JP-08039568, DE 1157769 et SU 401533 divulguent des dispositifs de manutention de pneumatique.

Un but de l'invention est de pallier ces inconvénients.

A cet effet, on prévoit selon l'invention un dispositif de manutention d'une ébauche crue de pneumatique comme défini dans la revendication 1, qui comprend un bâti et au moins un crochet monté rotatif par rapport au bâti entre une position de prise et une position dégagée autour d'un axe horizontal s'étendant hors du crochet.

Ainsi, le crochet peut passer de la position de prise à la position dégagée en respectant la géométrie du bourrelet de l'ébauche et sans nécessiter d'abaisser le haut de la membrane. Par conséquent, la géométrie du bandage est préservée. En outre, on évite le coincement du crochet entre la membrane et le bandage.

Dans un mode de réalisation, le dispositif comprend au moins une rampe circulaire de guidage du crochet.

De préférence, la rampe est formée par une gorge.

On peut prévoir que le crochet est monté rotatif par rapport à un support du crochet autour de l'axe et que le support est monté coulissant par rapport au bâti.

On prévoit également selon l'invention un procédé de manutention d'une ébauche crue de pneumatique comme défini dans la revendication 5, dans lequel on déplace au moins un crochet d'un dispositif de manutention d'une position de prise à une position dégagée, ou inversement, la position dégagée étant l'image de la position de prise par une isométrie, par rapport à un bâti du dispositif, comprenant une rotation autour d'un axe horizontal qui intercepte l'ébauche.

Ainsi la rotation peut s'effectuer à la fois près de l'ébauche et sans agresser celle-ci.

Dans un mode de réalisation, l'isométrie est constituée de la rotation.

Il convient ici d'observer que cela n'est toutefois pas nécessaire. On peut en effet mettre en oeuvre l'invention au moyen d'une isométrie formée par la composée d'une translation et d'une rotation. Il suffit que la rotation rende possible le mouvement de dégagement du crochet.

On peut prévoir qu'on déplace le crochet suivant un mouvement consistant en l'isométrie.

A l'inverse, on peut prévoir qu'on déplace le crochet suivant un mouvement différent de l'isométrie.

On remarque que le fait que la position dégagée soit l'image de la position de prise par l'isométrie précitée n'implique pas que le mouvement instantané du crochet de l'une à l'autre de ces positions consiste en cette isométrie. En d'autres termes, les deux positions peuvent être dans une certaine relation géométrique mutuelle sans que le mouvement instantané du crochet de l'une à l'autre de ces positions soit entièrement déterminé de ce simple fait. Et selon les modes de réalisation, ce mouvement peut effectivement correspondre à cette isométrie ou s'en distinguer.

Dans un autre mode de réalisation, le dispositif mettant en oeuvre ce procédé comprend deux biellettes mobiles l'une par rapport à l'autre et reliant le crochet à un bâti du dispositif.

De préférence, les biellettes sont reliées au bâti par des axes de rotation montés immobiles l'un par rapport à l'autre.

Avantageusement, les biellettes sont reliées au bâti par des axes de rotation, l'axe de la biellette la plus éloignée d'un centre du bâti s'étendant plus bas que l'axe de l'autre biellette.

On favorise ainsi le mouvement tournant du crochet.

De préférence, le dispositif comprend au moins une butée apte à limiter une course de l'une des biellettes.

D'autres caractéristiques et avantages de l'invention apparaîtront encore dans la description suivante de deux dispositifs donnés à titre d'exemples non limitatifs en référence aux dessins annexés sur lesquels :
- la figure 1 est une vue partielle en coupe axiale d'un dispositif de manutention selon un mode de réalisation de l'invention ;
- la figure 2 est une vue simplifiée à plus grande échelle du détail D de la figure 1, montrant le crochet en position de prise ;
- la figure 3 est une vue analogue à la figure 2 montrant le crochet en position dégagée ; et
- les figures 4 à 7 sont des vues analogues aux figures 2 et 3 illustrant deux autres dispositifs.

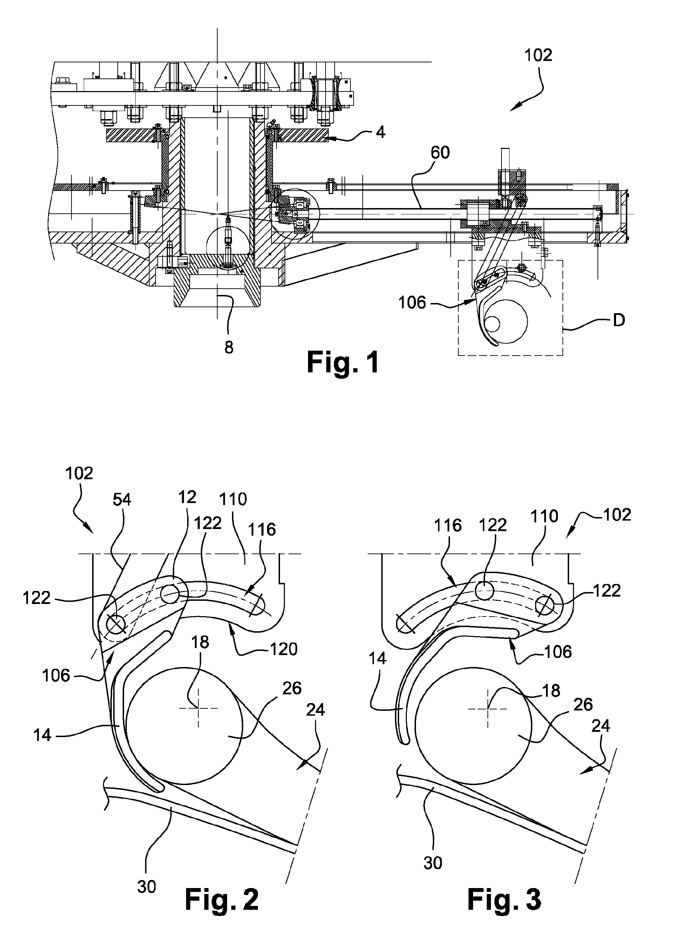

Nous avons illustré aux figures 1 à 3 un mode de réalisation d'un dispositif 102 formant une pince de manutention servant à la préhension d'une ébauche crue de pneumatique de véhicule. L'ébauche est formée en grande partie de gomme. L'invention peut être mise en oeuvre pour les ébauches crues de pneumatique des roues de véhicules de type léger, poids lourd ou génie civil.

La pince 102 comprend un bâti 4 et plusieurs crochets 106 portés par le bâti. Les crochets sont répartis régulièrement autour d'un axe principal vertical 8 du bâti. Ils s'étendent à la même distance de cet axe. Seul un des crochets 106 a été illustré sur la figure 1.

Le crochet 106 comprend une embase 12 portant une extrémité libre 14 du crochet. Cette dernière a une forme incurvée courbe dont un centre de courbure se trouve du côté de l'extrémité libre opposé à l'axe 8. La pointe du crochet est donc tournée vers l'extérieur suivant la direction radiale.

Pour chaque crochet 106, le bâti 4 comprend un support 110 portant le crochet 106. Le support 110 comprend une paroi plane s'étendant dans un plan général vertical radial à l'axe 8. Il présente en l'espèce une gorge 116 de forme circulaire traversant l'épaisseur de la paroi et courant le long de celle-ci. Le centre de courbure de la gorge se situe sous celle-ci, c'est-à-dire du même côté de la gorge que l'extrémité libre 14. Le support 110 a un bord inférieur 120 présentant une courbure similaire à celle de la forme générale de la gorge, lui conférant une allure de haricot.

L'embase 12 porte deux doigts ou tétons 122 occupant une position fixe sur l'embase 12, et tous deux engagés dans la gorge 116 qui leur sert de rampe et de piste pour guider leur déplacement. L'embase 12 s'étend d'un côté de la paroi du support, devant ou derrière, les doigts 122 étant retenus prisonniers dans la gorge.

Grâce à cet agencement, le crochet 106 est monté mobile à rotation par rapport au support 110 et au bâti 4 autour d'un axe horizontal 18 passant par le centre de courbure de la gorge 116 et perpendiculaire au plan de cette dernière et donc au plan radial.

Lorsque le crochet occupe sa position la plus basse et la plus proche de l'axe 8, illustrée sur la figure 2, le crochet est en position dite de prise et se trouve en fin de course en butée contre l'extrémité interne de la gorge. A l'inverse, tel qu'illustré à la figure 3, le crochet se trouve dans sa position la plus haute et la plus éloignée de l'axe 8 en étant en butée contre l'extrémité externe de la gorge, en position dégagée.

Le crochet 106 est donc monté mobile entre la position de prise et la position dégagée. Cette dernière est l'image de la position de prise par une isométrie dans le plan vertical radial à l'axe 8, isométrie constituée en l'espèce par une rotation autour de l'axe horizontal 18. La position de prise est l'image de la position dégagée par une rotation de même angle, en sens contraire, autour du même axe. L'axe 18 s'étend hors du crochet.

De plus, de l'une à l'autre des deux positions, et quel que soit son sens de déplacement, le crochet est animé d'un mouvement instantané consistant en une rotation autour de cet axe. La gorge 116 forme en effet une piste circulaire de guidage du crochet. Chaque point du crochet a donc pour trajectoire un arc de cercle centré sur l'axe 18.

La pince est utilisée comme suit.

Pour la fabrication d'un pneumatique, on réalise tout d'abord une ébauche crue formée notamment de gomme.

On dispose le bandage 24 ainsi obtenu à l'horizontale avec son axe principal vertical et on présente la pince au-dessus de l'ébauche. Les crochets 106 sont initialement en position dégagée comme illustré à la figure 3. On abaisse la pince pour introduire les crochets au niveau du diamètre intérieur supérieur formant le bourrelet supérieur 26 du bandage. Puis, on fait passer les crochets en position de prise illustrée à la figure 2. Au cours de ce mouvement, l'extrémité 14 de chaque crochet vient s'appliquer sous le bourrelet 26 par un mouvement tournant autour de l'axe 18. Le bandage se trouve alors supporté au niveau de son bourrelet par les crochets. La pince soulève ensuite l'ébauche et la charge dans la presse de cuisson. Dans cette dernière, une membrane gonflable 30 en caoutchouc se déploie à l'intérieur du bandage 24 et en supporte le poids. Dès lors, les crochets peuvent quitter la position de prise pour revenir en position dégagée par un mouvement de rotation inverse. Une fois arrivée dans cette position illustrée à la figure 3, la pince peut être éloignée du bandage. On ferme alors la presse et la vulcanisation du bandage commence. A l'issue de la vulcanisation, le pneumatique est sorti de la presse au moyen d'une pince spécifique en étant saisi par son bourrelet supérieur 26 et est évacué sur un convoyeur.

On voit que l'axe 18 est parallèle à la direction circonférentielle du bandage et du bourrelet. De plus, il s'étend dans le bourrelet lors du passage de la position dégagée à la position de prise et inversement.

Dans le présent exemple, chaque support 110 de crochet fait partie d'un équipage monté coulissant par rapport au bâti 4 suivant une direction horizontale radiale à l'axe 8, en l'espèce en étant engagé sur une tringle ou barre horizontale 60 qui lui est propre. Des moyens d'entrainement sont prévus pour commander ce coulissement de l'équipage.

Avant la prise d'un ébauche, les équipages occupent une position relativement proche de l'axe 8. On abaisse la pince. Une fois celle-ci en place par rapport à l'ébauche à saisir, les équipages s'éloignent de l'axe 8 en directions radiales pour rapprocher les crochets de l'ébauche et les placer en position dégagée, préalable à leur placement en position de prise comme indiqué plus haut. Inversement, une fois achevée la manutention de l'ébauche, les crochets en position dégagée comme sur la figure 3 sont rapprochés de l'axe 8 avant que la pince soit relevée.

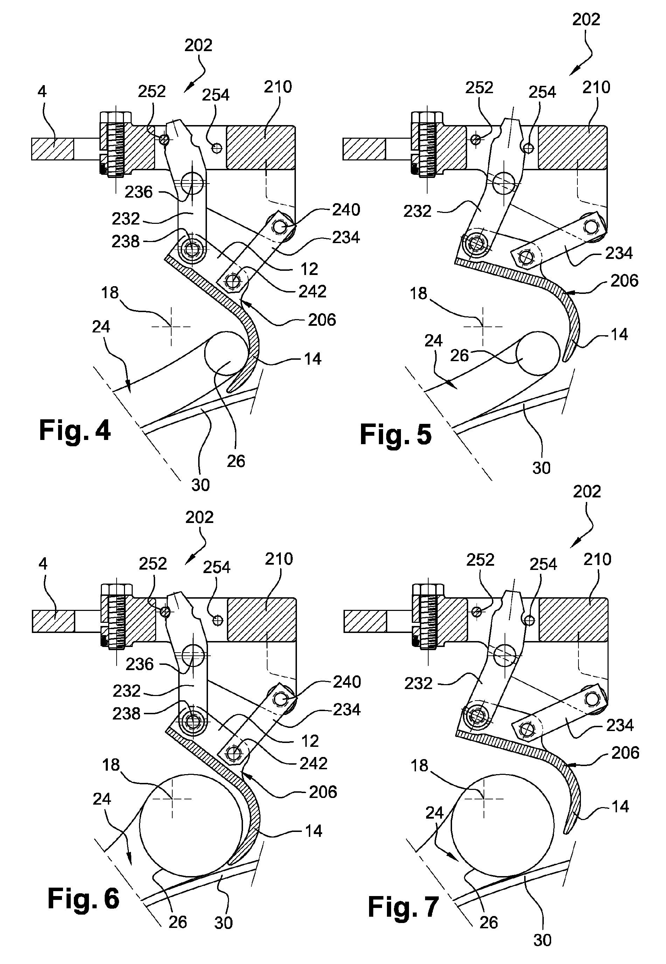

Une autre pince 202 a été illustrée aux figures 4 et 5. On retrouve le bâti 4 et le support 210 de chaque crochet 206. L'embase 12 de ce dernier est cette fois reliée indirectement au support 210 au moyen de deux biellettes 232, 234 qui sont mobiles l'une par rapport à l'autre et relient chacune le crochet au bâti 4. Les deux biellettes s'étendent dans un même plan vertical radial à l'axe 8. La biellette interne 232 occupe à tout moment une position plus proche de l'axe 8 que la biellette externe 234. La biellette interne 232 est articulée au support 210 autour d'un axe supérieur 236 et à l'embase 12 autour d'un axe inférieur 238. La biellette externe 234 est articulée au support 210 autour d'un axe supérieur 240 et à l'embase 12 autour d'un axe inférieur 242. Les quatre axes 236, 238, 240 et 242 sont horizontaux et parallèles entre eux. Les deux axes 236, 240 sont portés par une même pièce du support 210 et occupent donc des positions immobiles l'une par rapport à l'autre. Les deux axes 238 et 242 portés par l'embase 12 occupent aussi des positions immobiles l'une par rapport à l'autre. L'axe 236 s'étend en permanence à une hauteur supérieure à celle de l'axe 240. Il en est de même pour l'axe 238 à l'égard de l'axe 242.

Comme précédemment, le crochet peut occuper une position de prise et une position dégagée illustrées respectivement aux figures 4 et 5. A nouveau, la position dégagée est l'image de la position de prise par une isométrie dans le plan vertical radial, et réciproquement. Cette isométrie consiste en l'espèce aussi en une rotation autour d'un axe horizontal 18 situé du même côté de l'extrémité libre du crochet que le centre de courbure de cette dernière et situé à l'extérieur du crochet.

Contrairement au dispositif 102, l'axe 18 ne correspond pas directement à la géométrie de l'une des pièces comme c'était le cas pour la courbure de la gorge 116. De plus, cette fois, au cours de son déplacement de l'une à l'autre de ces deux positions, le crochet est animé d'un mouvement instantané qui est différent de cette rotation. En effet, chacune des biellettes a elle-même un mouvement de rotation autour de son axe supérieur respectif 236, 240. L'autre axe de chacune des biellettes, axe solidaire du crochet, ne peut donc pas avoir un axe de rotation autre que l'axe de rotation précité. Ainsi, l'axe 238 suit un mouvement de rotation autour de l'axe 236. Il en est de même pour l'axe 242 à l'égard de l'axe 240. Par conséquent, ici, l'isométrie qui permet à l'une des positions d'être l'image de l'autre ne correspond pas au mouvement instantané suivi par le crochet. Chaque point du crochet n'a donc pas pour trajectoire instantanée un arc de cercle centré sur l'axe 18.

Cette pince est utilisée de la même façon que la précédente. Le dispositif est agencé de sorte que l'axe 18 se trouve hors du bourrelet lors de l'utilisation du dispositif.

En l'espèce, on prévoit sur le support 210 deux butées 252, 254 servant à limiter la course de la biellette 232 et à définir ainsi les extrémités de la course du crochet qui correspondent à la position de prise et à la positon dégagée.

Le dispositif illustré aux figures 6 et 7 est similaire dans sa construction à celui des figures 4 et 5 à ceci près que cette fois l'axe de rotation 18 intercepte le bourrelet de l'ébauche et se situe donc dans la section de cette dernière à la manière de l'axe 18 de la figure 2. Ce changement de position de l'axe par rapport au précédent dispositif peut résulter d'un changement de dimensions ou de forme du bourrelet et/ou d'un changement de dimensions ou de configuration du dispositif.

Dans les trois exemples, un organe de manoeuvre 54 permet d'effectuer le déplacement du crochet. Cet organe peut être formé par la biellette 232 dans le deuxième exemple.

Dans ces exemples, lors de la prise ou du lâchage du produit, les crochets tournent autour du bourrelet 26 afin de ne pas endommager ce dernier ni la membrane de cuisson. Il n'est pas nécessaire de descendre le haut de la membrane 30 pour escamoter les crochets lors du dégagement. Par conséquent, la géométrie du bandage est mieux respectée lors de l'emboîtage de l'ébauche dans la presse. De plus, il n'y a pas de risque de coincement des crochets entre la membrane 30 et le bandage 24. De ce fait, l'invention permet aussi de réduire le temps de chargement et de déchargement du produit dans la presse. L'invention permet de manipuler les bandages sans risque de les déformer et d'altérer leur géométrie.

Bien entendu, on pourra apporter à l'invention de nombreuses modifications sans sortir du cadre de celle-ci.

On pourra prévoir que l'isométrie ne se réduit pas à une rotation et est formée par la composée d'une translation et d'une rotation, ou l'inverse, une telle isométrie comprenant elle aussi une composante de mouvement tournant autour du bourrelet 26.

On pourra prévoir que, lorsque le mouvement global du crochet de la position de prise à la position dégagée ne se fait pas suivant une rotation, son mouvement *instantané* sur une partie au moins de cette trajectoire est formé par une rotation dont l'axe varie, par exemple à chaque instant, et que cet axe variable, voire instantané, s'étend au moins une fois au cours de la trajectoire hors du crochet et notamment dans le bourrelet de l'ébauche.

## Revendications

1. Dispositif de manutention (102) d'une ébauche crue (24) de pneumatique, **caractérisé en ce qu'**il comprend un bâti (4) et au moins un crochet (106) monté exclusivement rotatif par rapport à un support relié au bâti entre une position de prise et une position dégagée, autour d'un axe horizontal (18) s'étendant hors du crochet, le crochet présentant un pointe orientée en direction opposée à un axe principal (8) du bâti.

2. Dispositif selon la revendication précédente qui comprend au moins une rampe circulaire (116) de guidage du crochet (106).

3. Dispositif selon la revendication précédente dans lequel la rampe est formée par une gorge (116).

4. Dispositif selon au moins l'une quelconque des revendications précédentes dans lequel le support est monté coulissant par rapport au bâti.

5. Procédé de manutention (102) d'une ébauche crue (24) de pneumatique, **caractérisé en ce qu'**on déplace au moins un crochet (106) d'un dispositif de manutention d'une position de prise de l'ébauche par le crochet à une position du crochet dégagée de l'ébauche, ou inversement, la position dégagée étant l'image de la position de prise par une isométrie, par rapport à un bâti du dispositif, comprenant une rotation autour d'un axe horizontal (18) qui intercepte l'ébauche à un point situé dans un plan de rotation du crochet.

6. Procédé selon la revendication précédente dans lequel l'isométrie est constituée de la rotation.

7. Procédé selon au moins l'une quelconque des revendications 5 et 6, dans lequel on déplace le crochet (106) suivant un mouvement consistant en l'isométrie.

8. Procédé selon au moins l'une quelconque des revendications 5 et 6, dans lequel on déplace le crochet suivant un mouvement différent de l'isométrie.

## Patentansprüche

1. Vorrichtung zur Handhabung (102) eines Reifenrohlings (24), **dadurch gekennzeichnet, dass** sie einen Rahmen (4) und mindestens einen Haken (106), der ausschließlich rotatorisch bezüglich eines mit dem Rahmen verbundenen Trägers zwischen einer Greifstellung und einer ausgerückten Stellung um eine sich außerhalb des Hakens erstreckende horizontale Achse (18) angebracht ist, umfasst, wobei der Haken eine in die entgegengesetzte Richtung zu einer Hauptachse (8) des Rahmens ausgerichtete Spitze aufweist.

2. Vorrichtung nach dem vorhergehenden Anspruch, die mindestens eine kreisförmige Rampe (116) zur Führung des Hakens (106) umfasst.

3. Vorrichtung nach dem vorhergehenden Anspruch, wobei die Rampe durch eine Nut (116) gebildet wird.

4. Vorrichtung nach mindestens einem der vorhergehenden Ansprüche, wobei der Träger verschiebbar bezüglich des Rahmens angebracht ist.

5. Vorrichtung zur Handhabung (102) eines Reifenrohlings (24), **dadurch gekennzeichnet, dass** mindestens ein Haken (106) einer Handhabungsvorrichtung aus einer Stellung, in der der Rohling durch den Haken ergriffen ist, in eine Stellung, in der der Haken aus dem Rohling ausgerückt ist, oder umgekehrt, bewegt wird, wobei die ausgerückte Stellung ein isometrisches Abbild der Greifstellung bezüglich eines Rahmens der Vorrichtung ist, mit einer Drehung um eine horizontale Achse (18), die den Rohling an einer sich in einer Drehebene des Hakens befindende Stelle schneidet.

6. Verfahren nach dem vorhergehenden Anspruch, wobei die Isometrie aus der Drehung besteht.

7. Verfahren nach mindestens einem der Ansprüche 5 und 6, wobei der Haken (106) gemäß einer aus Isometrie bestehenden Bewegung bewegt wird.

8. Verfahren nach mindestens einem der Ansprüche 5 und 6, wobei der Haken gemäß einer nicht aus Isometrie bestehenden Bewegung bewegt wird.

## Claims

1. Device for handling (102) a green tyre (24), **characterized in that** it comprises a supporting structure (4) and at least one hook (106) mounted exclusively to rotate with respect to a support connected to the supporting structure between a gripping position and a disengaged position, about a horizontal axis (18) running outside of the hook, the hook having a tip oriented in the opposite direction to a main axis (8) of the supporting structure.

2. Device according to the preceding claim which comprises at least one circular ramp (116) for guiding the hook (106).

3. Device according to the preceding claim, in which the ramp is formed by a groove (116).

4. Device according to at least any one of the preceding claims, in which the support is mounted so that it can slide with respect to the supporting structure.

5. Method for handling (102) a green tyre (24), **characterized in that** at least one hook (106) of a handling device is moved from a position in which the green tyre is gripped by the hook to a position in which the hook is disengaged from the green tyre or vice versa, the disengaged position being the image of the gripping position through isometry, with respect to a supporting structure of the device, involving a rotation about a horizontal axis (18) which intercepts the green tyre at a point situated in a plane of rotation of the hook.

6. Method according to the preceding claim, in which the isometry consists of rotation.

7. Method according to at least either one of claims 5 and 6, in which the hook (106) is moved in a movement consisting of isometry.

8. Method according to at least either one of claims 5 and 6, in which the hook is moved in a movement different from isometry.
